# EUROPEAN PATENT SPECIFICATION

(11) **EP 2 963 721 B1**
(45) Date of publication and mention of the grant of the patent: **16.08.2017**
(21) Application number: 15173537.0
(22) Date of filing: 24.06.2015
(51) Int. Cl.: H01M 8/0662, H01M 8/0432, H01M 8/0438, H01M 8/04664, H01M 8/124, H01M 8/0612

(54) **FUEL CELL SYSTEM**
BRENNSTOFFZELLENSYSTEM
SYSTEME DE PILE A COMBUSTIBLE

(30) Priority: 30.06.2014 JP 2014133940
(43) Date of publication of application: 06.01.2016
(73) Proprietor: AISIN SEIKI KABUSHIKI KAISHA, Kariya-shi, Aichi 448-8650 (JP); OSAKA GAS CO., LTD., Osaka-shi, Osaka 541-0046 (JP)
(72) Inventor: OHKAWARA, Hiroki, Kariya-shi, Aichi 448-8650 (JP); UENOYAMA, Satoru, Osaka-shi, Osaka 541-0046 (JP); HIGAKI, Katsuki, Osaka-shi, Osaka 541-0046 (JP)
(74) Representative: TBK

(56) References cited:
- EP-A1- 2 716 597
- WO-A1-2014/097622
- JP-A- 2011 159 485

## Description

### [Technical Field]

The present invention relates to a fuel cell system.

### [Background Art]

As a kind of fuel cell systems, an example disclosed in Patent Literature 1 is known. As shown in Fig. 1 of Patent Literature 1, a fuel cell system includes a desulfurizer 22 which removes a sulfur component in a fuel gas supplied through a fuel gas supply flow channel 14, a reformer 4 which reforms the desulfurized fuel gas, and a fuel cell stack 6 which generates power by the oxidization and the reduction of oxidant and a reformed fuel gas. Since the fuel cell system performs a fuel gas desulfurizing reaction using the desulfurizer 22 in a condition with hydrogen, a recycle flow channel 48 is provided so as to return a part of the fuel gas reformed by the reformer 4 to the desulfurizer 22. Here, the recycle flow channel 48 is provided with an orifice member 50, and the flow rate of the reformed fuel gas returned to the reformer 4 is adjusted by the orifice member 50.

Patent Literature 2 discloses a fuel cell system which is provided with a hydrodesulfurizer, a raw material feeder, a hydrogen generator, a fuel cell, a fuel gas flow path, a recycle gas flow path, an off fuel gas flow path, a first open/close valve, and a controller, and the controller is configured so as to close the first open/close valve under prescribed conditions and activate the raw material feeder.

Patent Literature 3 discloses a hydrogen generation device which comprises a first path used to supply a raw material to a reformer through at least a first desulfurization unit; a second path used to supply the raw material to the reformer through only the second desulfurization unit; a switch unit; a flow control unit which selectively enables or inhibits a flow of the hydrogen-containing gas generated in the reformer toward the second desulfurization unit; and a controller configured to execute processing in such a manner that in at least either a time point before generation of the hydrogen-containing gas is stopped, or start-up, the switch unit performs switching to select the first path, and the flow control unit enables the flow of the hydrogen-containing gas, while the reformer is generating the hydrogen-containing gas.

### [Prior Art Literature]

### [Patent Literature]

[Patent Literature 1] JP 2011-159485 A
[Patent Literature 2] WO 2014/097622 A1
[Patent Literature 3] EP 2 716 597 A1

### [Summary of the Invention]

### [Problems that the Invention is to Solve]

In the above-described fuel cell system disclosed in Patent Literature 1, the flow rate of the reformed fuel gas returned to the reformer 4 is adjusted by the orifice member 50 in the recycle flow channel 48. However, there is a concern that a passage hole of the orifice member 50 may be blocked by a foreign matter. When the passage hole of the orifice member 50 is blocked by the foreign matter, the reformed fuel gas does not flow to the recycle flow channel 48. Thus, there is a concern that the desulfurizing function of the desulfurizer 22 may be degraded due to the non-mixed state of hydrogen of the reformed fuel gas. Further, when the desulfurizing function in the desulfurizer 22 is degraded, there is a concern that the fuel cell stack 6 may be degraded by a sulfur component contained in the reformed fuel gas.

The invention is made to solve the above-described problems, and an object thereof is to provide a fuel cell system that reliably detects the abnormality of a recycle fuel pipe that returns a part of fuel reformed by a reforming unit to a desulfurizer and suppresses the degradation of the reforming unit or the failure of a fuel cell due to a sulfur component.

### [Means for Solving the Problems]

The above-described problems are solved by a fuel cell system according to claim 1. Further advantageous developments are subject-matters of the dependent claims.

In order to solve the above-described problems, according to Aspect 1 of the invention, provided is a fuel cell system including: a fuel cell which generates power by fuel and an oxidant gas; a reforming unit which generates the fuel from a reforming material and reforming water and supplies the fuel to the fuel cell; a desulfurizer which removes a sulfur component contained in the reforming material and supplies the reforming material to the reforming unit; a recycle fuel pipe which connects a fuel supply pipe supplying the fuel from the reforming unit to the fuel cell to a reforming material supply pipe supplying the reforming material to the desulfurizer and returns a part of the fuel as recycle fuel to the desulfurizer; a recycle fuel supply device which circulates the recycle fuel in the recycle fuel pipe; a temperature sensor which directly or indirectly detects the temperature of the recycle fuel passing through the recycle fuel pipe; and a detection portion which detects the passage and/or the flow rate of the recycle fuel passing through the recycle fuel pipe based on the temperature of the recycle fuel detected by the temperature sensor.

Accordingly, it is possible to detect the passage and/or the flow rate of the recycle fuel passing through the recycle fuel pipe by the use of the detection portion based on the detection temperature of the temperature sensor. Therefore, it is possible to reliably detect the abnormality of the recycle fuel pipe. As a result, it is possible to suppress the degradation of the reforming unit or the failure of the fuel cell due to a sulfur component.

Further, according to Aspect 1 of the invention, the fuel cell system comprises: a heat exchanger (39c) provided in the recycle fuel pipe, the heat exchanger exchanging heat with the recycle fuel by a refrigerant, wherein the temperature sensor detects the temperature of the refrigerant or the heat exchanger, thereby to indirectly detect the temperature of the recycle fuel.

Accordingly, since the recycle fuel is not easily influenced by the temperature in the vicinity of the recycle fuel pipe, it is possible to accurately detect the temperature of the recycle fuel.

Further, according to Aspect 2 of the invention, provided is the fuel cell system according to Aspect 1, wherein the reforming water supplied to the reforming unit is used as the refrigerant.

Accordingly, it is possible to recover the heat of the recycle fuel by the reforming water and hence to improve the thermal efficiency and the power generation efficiency of the fuel cell system.

Further, according to Aspect 3 of the invention, provided is the fuel cell system according to Aspect 1, wherein cathode air supplied to the fuel cell is used as the refrigerant.

Accordingly, it is possible to recover the heat of the recycle fuel by the cathode air and hence to improve the thermal efficiency and the power generation efficiency of the fuel cell system.

Further, according to Aspect 4 of the invention, provided is the fuel cell system according to Aspect 1, wherein exhaust heat recovery water recovering the exhaust heat of the fuel cell is used as the refrigerant.

Accordingly, it is possible to recover the heat of the recycle fuel by the exhaust heat recovery water recovering the exhaust heat of the fuel cell and hence to improve the heat recovery efficiency of the fuel cell system.

Further, according to Aspect 5 of the invention, provided is the fuel cell system according to Aspect 1, wherein air inside a housing accommodating at least the fuel cell is used as the refrigerant.

Accordingly, since there is no need to provide a pipe for the refrigerant exchanging heat with the recycle fuel, it is possible to prevent an increase in cost.

Further, a control device may determine that the recycle fuel pipe is normal when the temperature of the recycle fuel detected by the temperature sensor falls within an appropriate temperature range and may determine that the recycle fuel pipe is not normal when the temperature of the recycle fuel is lower or higher than the appropriate temperature range during a warming operation or a power generation operation.

Accordingly, the control device may detect the abnormality of the recycle gas pipe by determining whether the recycle gas normally passes through the recycle gas pipe based on the detection temperature of the temperature sensor (the temperature of the recycle fuel).

Further, according to Aspect 6 of the invention, provided is the fuel cell system according to any one of Aspects 1 to 5, further including: a control device which determines that the recycle fuel pipe is normal when a temperature difference of the refrigerant before and after the heat exchanger falls within an appropriate temperature range and determines that the recycle fuel pipe is not normal when the temperature difference is lower or higher than the appropriate temperature range during a warming operation or a power generation operation.

Accordingly, the control device can detect the abnormality of the recycle gas pipe by determining whether the recycle gas normally passes through the recycle gas pipe based on the detection temperature of the temperature sensor (the temperature of the refrigerant of the heat exchanger).

### [Brief Description of the Drawings]

[Fig. 1] Fig. 1 is a schematic diagram illustrating an outline of a first unclaimed embodiment of a fuel cell system.
[Fig. 2] Fig. 2 is a block diagram illustrating the fuel cell system shown in Fig. 1.
[Fig. 3] Fig. 3 is a flowchart of a program that is executed by a control device shown in Fig. 2.
[Fig. 4] Fig. 4 is a map illustrating a relation between a temperature and a flow rate in a recycle gas.
[Fig. 5] Fig. 5 is a schematic diagram illustrating an outline of a second embodiment of a fuel cell system according to the invention.
[Fig. 6] Fig. 6 is a flowchart of a program that is executed by a control device.
[Fig. 7] Fig. 7 is a map illustrating a relation between a temperature difference of refrigerant before and after a heat exchanger and a flow rate of a recycle gas.
[Fig. 8] Fig. 8 is a schematic diagram illustrating an outline of a first modified example of the second embodiment of the fuel cell system according to the invention.
[Fig. 9] Fig. 9 is a schematic diagram illustrating an outline of a second modified example of the second embodiment of the fuel cell system according to the invention.

### [Mode for Carrying Out the Invention]

### (First Unclaimed Embodiment)

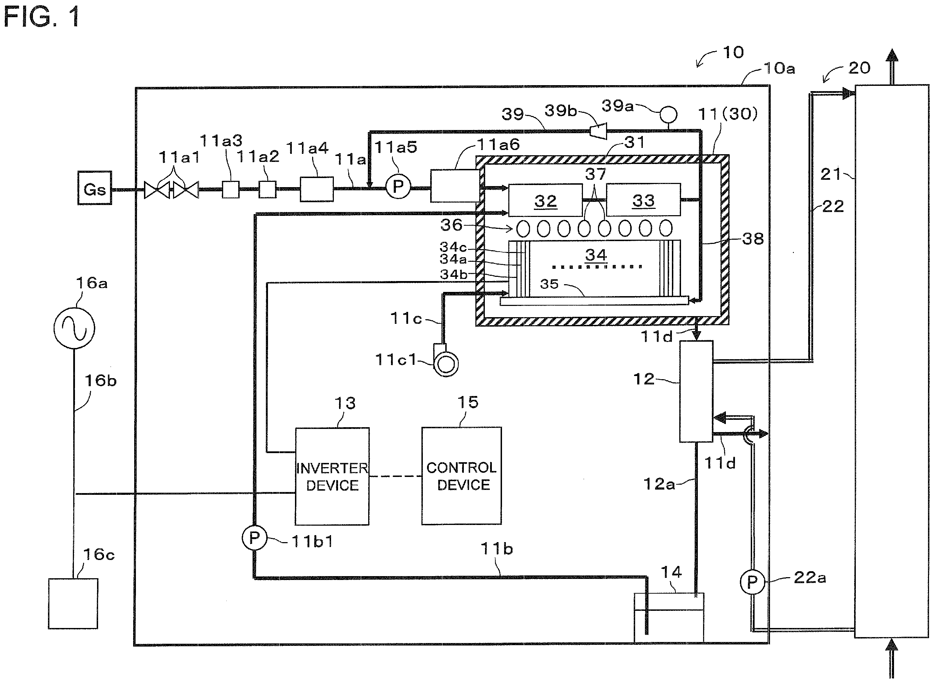

Hereinafter, a first unclaimed embodiment of a fuel cell system will be described. As shown in Fig. 1, the fuel cell system includes a power generation unit 10 and a hot-water storage tank 21. The power generation unit 10 includes a housing 10a, a fuel cell module 11, a heat exchanger 12, an inverter device 13, a water tank 14, and a control device 15.

As will be described later, the fuel cell module 11 includes at least a fuel cell 34. A reforming material, reforming water, and cathode air are supplied to the fuel cell module 11. Specifically, the fuel cell module 11 is connected to the other end of a reforming material supply pipe 11 a of which one end is connected to a supply source Gs so that a reforming material is supplied thereto. Further, the fuel cell module 11 is connected to the other end of a water supply pipe 11 b of which one end is connected to the water tank 14 so that reforming water is supplied thereto. The water supply pipe 11 b is provided with a reforming water pump 11 b1. Further, the fuel cell module 11 is connected to the other end of a cathode air supply pipe 11c of which one end is connected to a cathode air blower 11 c1 so that cathode air is supplied thereto.

The reforming material supply pipe 11a will be described in detail. A shutoff valve 11 a1, a pressure sensor 11 a3, a flow rate sensor 11 a2, a pressure adjustment device 11 a4, a material pump 11 a5, and a desulfurizer 11a6 are provided in the reforming material supply pipe 11 a in this order from the upstream side. The shutoff valve 11a1, the flow rate sensor 11 a2, the pressure sensor 11 a3, the pressure adjustment device 11 a4, the material pump 11 a5, and the desulfurizer 11a6 are accommodated in the housing 10a.

The shutoff valve 11 a1 is a valve (formed by two valves in series) which shuts off the reforming material supply pipe 11 a in an openable and closable manner by the instruction of the control device 15. The flow rate sensor 11 a2 is used to detect the flow rate of the fuel (the reforming material) supplied to the fuel cell 34, that is, the flow rate per unit time, and transmits the detection result to the control device 15. The pressure sensor 11 a3 is used to detect the pressure (particularly, the pressure in the installation place for the pressure sensor 11 a3) of the fuel (the reforming material) supplied to the fuel cell 34, and transmits the detection result to the control device 15.

The pressure adjustment device 11 a4 outputs fuel while adjusting the pressure of the fuel input thereto in a predetermined pressure state. For example, the pressure adjustment device 11 a4 is configured as a zero governor which outputs fuel input thereto in an atmospheric pressure state. The pressure adjustment device 11 a4 is used to decrease the pressure at the primary side of the reforming material supply pipe 11 a in relation to the material pump 11 a5 compared to the pressure of a recycle gas pipe 39 to be described later. The pressure adjustment device 11 a4 is a recycle fuel supply device used to circulate a reformed gas (a recycle fuel) in the recycle gas pipe 39 by setting the pressure of the reforming material supply pipe 11a to be lower than the pressure of the recycle gas pipe 39. The material pump 11 a5 is a material supply device which supplies fuel (reforming material) to the fuel cell 34, and is used to adjust the material supply amount (the supply flow rate (the flow rate per unit time)) from the supply source Gs in accordance with the control instruction value from the control device 15. The material pump 11 a5 is a pressure feeding device which suctions a reforming material and pressure-feeds the reforming material to a reforming unit 33.

The desulfurizer 11a6 is used to remove a sulfur component (for example, a sulfur compound) in the reforming material. The desulfurizer 11a6 stores a catalyst and superhigh-order desulfurizing agent. In the catalyst, hydrogen sulfide is generated by the reaction between a sulfur compound and hydrogen. For example, the catalyst is nickel-molybdenum or cobalt-molybdenum. As the superhigh-order desulfurizing agent, for example, a copper-zinc desulfurizing agent, a copper-zinc-aluminum desulfurizing agent, or the like may be used. The superhigh-order desulfurizing agent removes hydrogen sulfide by capturing the hydrogen sulfide changed from the sulfur compound by the catalyst. Such superhigh-order desulfurizing agent exhibits an excellent desulfurizing action in a high-temperature state of 200 to 300°C (for example, 250 to 300°C). Accordingly, the desulfurizer 11a6 is disposed at a position where the internal temperature becomes a high-temperature state of 200 to 300°C (for example, 250 to 300°C). For example, the desulfurizer 11 a6 is disposed inside a housing 31 or on the outer surface of the housing 31.

A part of a gas reformed by the reforming unit 33 is set to be returned to the reforming material supply pipe 11a, when using the superhigh-order desulfurizing agent as the desulfurizing agent in the fuel system. Specifically, a recycle gas pipe (a recycle fuel pipe) 39 is provided so as to return the reformed gas. One end of the recycle gas pipe 39 is connected to a reformed gas supply pipe (a fuel supply pipe) 38 which supplies a reformed gas (fuel) from the reforming unit 33 to the fuel cell 34. The other end of the recycle gas pipe 39 is connected to the upstream position of the desulfurizer 11a6 of the reforming material supply pipe 11a, more specifically, the position between the arrangement position of the material pump 11a5 of the reforming material supply pipe 11a and the arrangement position of the pressure adjustment device 11a4. Accordingly, a part of the reformed gas which flows from the reforming unit 33 through the reformed gas supply pipe 38 is returned to the reforming material supply pipe 11a through the recycle gas pipe 39.

In this way, since a part of the reformed gas containing hydrogen is returned to the reforming material supply pipe 11a, the hydrogen in the reformed gas is mixed with the reforming material and is fed to the superhigh-order desulfurizing agent inside the desulfurizer 11a6 through the reforming material supply pipe 11a. As a result, the sulfur compound in the reforming material causes a reaction with the hydrogen. Then, hydrogen sulfide is generated, and the hydrogen sulfide is removed by the superhigh-order desulfurizing agent.

The recycle gas pipe 39 is provided with a temperature sensor 39a and an orifice 39b. The temperature sensor 39a directly detects the temperature of the recycle gas flowing through the recycle gas pipe 39 and transmits the detection result to the control device 15. The orifice 39b is provided with a passage hole, and is used to adjust the flow rate of the reformed gas which is returned through the recycle gas pipe 39 by the passage hole.

The heat exchanger 12 is a heat exchanger to which an exhaust gas discharged from the fuel cell module 11 and hot storage water in the hot-water storage tank 21 are supplied so as to exchange heat between the exhaust gas and the hot storage water. Specifically, the hot-water storage tank 21 is used to store hot storage water, and is connected to a hot storage water circulation line 22 through which the hot storage water is circulated (circulated in a direction indicated by the arrow of the drawing). A hot storage water circulation pump 22a and the heat exchanger 12 are provided on the hot storage water circulation line 22 in this order from the lower end of the hot-water storage tank 21 to the upper end thereof. The heat exchanger 12 is connected (by penetration) to an exhaust pipe 11 d extending from the fuel cell module 11. The heat exchanger 12 is connected to a condensed water supply pipe 12a connected to the water tank 14.

In the heat exchanger 12, the exhaust gas discharged from the fuel cell module 11 is introduced into the heat exchanger 12 through the exhaust pipe 11 d, and exchanges heat with the hot storage water so as to be condensed and cooled. The condensed exhaust gas is discharged to the outside through the exhaust pipe 11 d. Further, the condensed water is supplied to the water tank 14 through the condensed water supply pipe 12a. Moreover, the water tank 14 purifies the condensed water by an ion exchange resin.

An exhaust heat recovery system 20 includes the heat exchanger 12, the hot-water storage tank 21, and the hot storage water circulation line 22. The exhaust heat recovery system 20 recovers the exhaust heat of the fuel cell module 11 and stores the recovered exhaust heat in the hot storage water tank 21.

Further, the inverter device 13 inputs a DC voltage output from the fuel cell 34, converts the DC voltage into a predetermined AC voltage, and outputs the AC voltage to a power source line 16b connected to an AC system power source 16a and an external power load 16c (for example, electrical appliances). Further, the inverter device 13 inputs the AC voltage supplied from the AC system power source 16a through the power source line 16b, converts the AC voltage into a predetermined DC voltage, and outputs the DC voltage to an auxiliary machine (a pump, a blower, or the like) or the control device 15. Moreover, the control device 15 controls the operation of the fuel cell system by driving the auxiliary machine.

The fuel cell module 11(30) includes the housing 31, an evaporation unit 32, the reforming unit 33, and the fuel cell 34. The housing 31 is formed to be a box shape by a heat insulating material.

The evaporation unit 32 is heated by a combustion gas to be described later so as to generate steam by evaporating reforming water supplied thereto and to pre-heat a reforming material supplied thereto. The evaporation unit 32 mixes the steam generated in this way and the pre-heated reforming material and supplies the mixture to the reforming unit 33. As the reforming material, there is known reforming gas fuel such as a natural gas and an LP gas or reforming liquid fuel such as kerosene, gasoline, and methanol. In the embodiment, a natural gas used as the reforming material will be explained.

The evaporation unit 32 is connected to the other end of the water supply pipe 11 b of which one end (the lower end) is connected to the water tank 14. Further, the evaporation unit 32 is connected to the reforming material supply pipe 11 a of which one end is connected to the supply source Gs. The supply source Gs is, for example, a city gas supply pipe and an LP gas container.

Since a heat necessary for the steam reforming reaction is supplied to the reforming unit 33 while the reforming unit is heated by the above-described combustion gas, a reformed gas is generated and derived from the mixed gas (the reforming material and the steam) supplied from the evaporation unit 32. A catalyst (for example, an Ru or Ni-based catalyst) is charged in the reforming unit 33, and the mixed gas is reformed by the reaction with the catalyst so that a gas containing hydrogen gas and carbon monoxide is generated (a so-called steam reforming reaction). The reformed gas contains hydrogen, carbon monoxide, carbon dioxide, steam, an unreformed natural gas (methane gas), and reforming water (steam) not used for the reforming process. In this way, the reforming unit 33 generates a reformed gas (fuel) from a reforming material (raw fuel) and reforming water, and supplies the reformed gas to the fuel cell 34. Moreover, the steam reforming reaction is an endothermic reaction.

The fuel cell 34 generates power by the use of fuel and an oxidant gas. The fuel cell 34 has a configuration in which a fuel electrode, an air electrode (an oxidant electrode), and a plurality of cells 34a interposed between both electrodes and formed of electrolyte are stacked. The fuel cell of the embodiment is a solid oxide fuel cell, and zirconium oxide which is one kind of solid oxides is used as the electrolyte. A Hydrogen gas, a carbon monoxide gas, a methane gas, and the like are supplied as fuel to the fuel electrode of the fuel cell 34. A natural gas or a coal gas may be directly used as fuel in addition to the hydrogen gas. In this case, the reforming unit 33 may not be provided.

A fuel flow channel 34b used for the circulation of a reformed gas as fuel is formed at the fuel electrode side of the cell 34a. An air flow channel 34c used for the circulation of air (cathode air) as an oxidant gas is formed at the air electrode side of the cell 34a. The fuel cell 34 generates power by the use of the fuel and the oxidant gas.

The fuel cell 34 is provided on a manifold 35. A reformed gas is supplied from the reforming unit 33 to the manifold 35 through the reformed gas supply pipe 38. The lower end (one end) of the fuel flow channel 34b is connected to the fuel outlet of the manifold 35, and a reformed gas which is derived from the fuel outlet is introduced from the lower end and is derived from the upper end thereof. Cathode air which is sent by the cathode air blower 11c1 is supplied through the cathode air supply pipe 11c, is introduced from the lower end of the air flow channel 34c, and is derived from the upper end thereof.

A combustion unit 36 is provided between the fuel cell 34 and a group of the evaporation unit 32 and the reforming unit 33. The combustion unit 36 heats the reforming unit 33 by burning an anode off-gas (a fuel off-gas) from the fuel cell 34 and a cathode off-gas (an oxidant off-gas) from the fuel cell 34. A flame 37 is generated in the combustion unit 36 due to the combustion of the anode off-gas. An exhaust gas is generated in the combustion unit 36 due to the combustion of the anode off-gas.

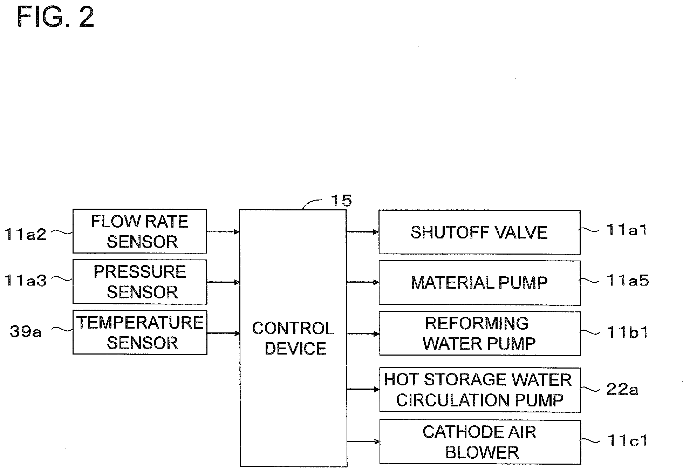

Further, the fuel cell system includes the control device 15. The control device 15 is connected to the flow rate sensor 11a2, the pressure sensor 11a3, the temperature sensor 39a, the shutoff valve 11a1, the pumps 11a5, 11b1, and 22a, and the cathode air blower 11c1 (see Fig. 2). The control device 15 includes a microcomputer (not shown), and the microcomputer includes an input and output interface, a CPU, a RAM, and a ROM (which are not shown in the drawings) which are connected to one another through a bus. The CPU executes various programs necessary for the operation of the fuel cell system. The RAM temporarily stores a variable necessary for the execution of the program, and the ROM stores the program.

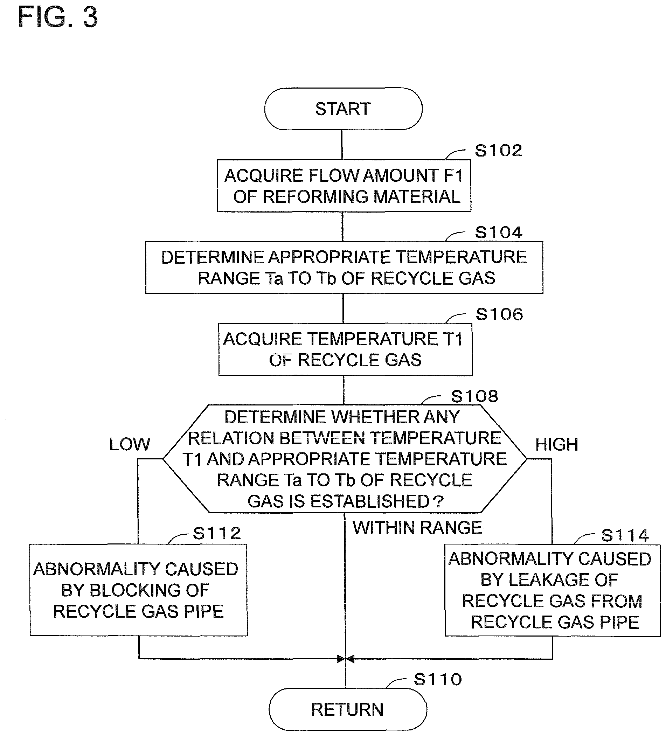

Next, an operation of the fuel cell system of the above-described first embodiment will be described. The control device 15 executes a flowchart shown in Fig. 3 during the operation (the warming operation and the power generation operation) of the fuel cell system. In step S102, the control device 15 acquires the flow rate F1 of the reforming material detected by the flow rate sensor 11a2.

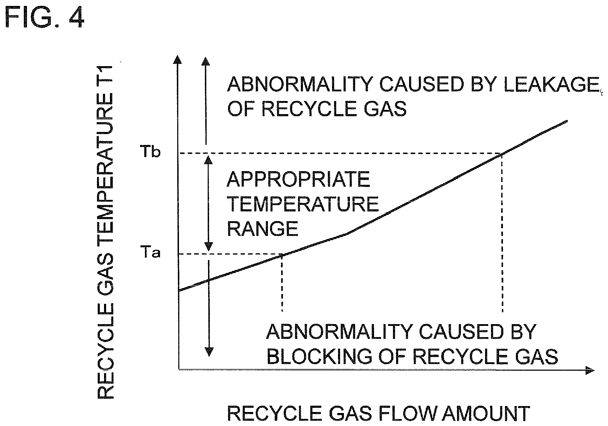

When a reforming material passes through the reforming material supply pipe 11a, a recycle gas passes through the recycle gas pipe 39. The recycle gas is a part of a gas reformed in a high-temperature state (about 600°C) by the reforming unit 33. For this reason, when the recycle gas pipe 39 is normal, the temperature T1 of the recycle gas falls within the appropriate temperature range Ta to Tb (Ta indicates the lower-limit temperature of the appropriate temperature and Tb indicates the upper-limit temperature of the appropriate temperature) as shown in Fig. 4.

Further, a recycle gas ratio has a correlation with the flow rate F1 of the reforming material. That is, the ratio of the recycle gas passing through the recycle gas pipe 39 decreases as the flow rate F1 of the reforming material increases. The differential pressure generated in the recycle gas pipe 39 between the pressure (which increases as the power generation amount (the flow rate F1 of the reforming material) increases) before the fuel cell 34 and the pressure after the pressure adjustment device 11 a4 is adjusted by the pressure adjustment device 11 a4. The flow rate of the recycle gas and the temperature of the recycle gas change in accordance with the flow rate (the power generation amount) of the reforming material due to the pressure loss ratio. For this reason, the appropriate temperature range Ta to Tb of the recycle gas shown in Fig. 4 changes in accordance with the flow rate F1 of the reforming material.

In step S104, the control device 15 determines the appropriate temperature range Ta to Tb of the recycle gas in response to the flow rate F1 of the reforming material acquired in step S102. In step S106, the control device 15 acquires the detection temperature T1 of the recycle gas detected by the temperature sensor 39a. In step S108, the control device 15 determines whether the detection temperature T1 of the recycle gas acquired in step S106 falls within the appropriate temperature range Ta to Tb determined in step S104, is lower than the appropriate temperature range Ta to Tb (lower than the lower-limit temperature Ta), or is higher than the appropriate temperature range Ta to Tb (higher than the upper-limit temperature Tb). Moreover, the process in step S108 indicates a process of detecting a state where the recycle gas normally passes through the recycle gas pipe 39 based on the detection temperature of the recycle gas detected by the temperature sensor 39a.

When the recycle gas pipe 39 is normal, the recycle gas passes through the recycle gas pipe 39 in response to the flow rate F1 of the reforming material, and the temperature of the recycle gas falls within the appropriate temperature range Ta to Tb. In this case, the control device 15 determines that the detection temperature falls within the range in step S108, and moves the program to step S110 so as to end the routine.

Meanwhile, when abnormality occurs in which the passage hole of the orifice 39b of the recycle gas pipe 39 is blocked, the recycle gas does not pass through the recycle gas pipe 39. When the recycle gas pipe 39 is blocked, the detection temperature detected by the temperature sensor 39a becomes lower than the appropriate temperature range Ta to Tb. In this case, the control device 15 determines that the detection temperature T1 of the recycle gas acquired in step S108 is lower than the appropriate temperature range Ta to Tb and moves the program to step S112. In step S112, the control device 15 determines that abnormality occurs due to the blocking of the recycle gas pipe 39 and moves the program to step S110 so as to end the routine.

Further, when abnormality occurs in which the recycle gas leaks from the recycle gas pipe 39, a large amount of the recycle gas passes through the recycle gas pipe 39 compared to the case where any abnormality does not occur. Then, when a large amount of the recycle gas passes through the recycle gas pipe 39, the detection temperature detected by the temperature sensor 39a increases. In this case, the control device 15 determines that the detection temperature T1 of the recycle gas acquired in step S108 is higher than the appropriate temperature range Ta to Tb and moves the program to step S114. In step S114, the control device 15 determines that the recycle gas leaks from the recycle gas pipe 39 and moves the program to step S110 so as to end the routine.

As described above, the fuel cell system of the first embodiment includes the temperature sensor 39a which directly detects the temperature of the recycle fuel passing through the recycle gas pipe 39 and the detection portion (step S108) which detects a state where the recycle gas normally passes through the recycle gas pipe 39 based on the detection temperature Tl of the temperature sensor 39a. The control device 15 may detect the abnormality of the recycle gas pipe 39 by determining whether the recycle gas normally passes through the recycle gas pipe 39 by the use of the detection portion. Moreover, in the first embodiment, the temperature of the recycle gas is detected by the temperature sensor 39a (step S106), and the normal passage state of the recycle gas is detected based on the detection temperature detected by the temperature sensor 39a (step S108). However, the invention is not limited thereto. For example, the flow rate of the recycle gas passing through the recycle gas pipe 39 may be calculated based on the detection temperature Tl of the recycle gas detected in step S106. Then, the control device may determine whether the calculated flow rate of the recycle gas is the normal flow rate.

### (Second Embodiment)

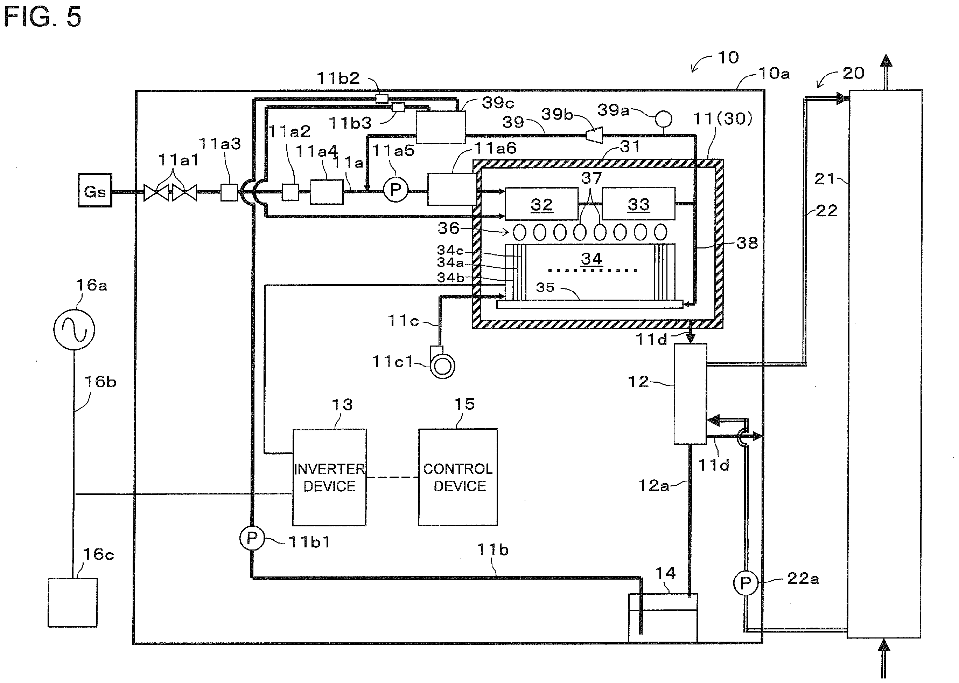

As shown in Fig. 5, a fuel cell system of a second embodiment has a configuration in which the fuel cell system of the first embodiment includes a heat exchanger 39c provided in the recycle gas pipe 39 so as to exchange heat between a refrigerant and a recycle gas. The heat exchanger 39c is provided at the downstream side of the recycle gas pipe 39 in relation to the orifice 39b. Here, reforming water supplied to the reforming unit 33 is used as the refrigerant exchanging heat with the recycle gas, and the heat exchanger 39c accommodates a part of the water supply pipe 11 b which supplies the reforming water to the reforming unit 33. The heat of the recycle gas is exchanged with the reforming water passing through the water supply pipe 11 b.

The water supply pipe 11 b is provided with temperature sensors 11b2 and 11 b3 which are provided at the upstream side and the downstream side in relation to the heat exchanger 39c, and the detection temperature values of the temperature sensors 11b2 and 11b3 are transmitted to the control device 15. The upstream temperature sensor 11 b2 is used to detect the temperature of the reforming water supposed to pass through the heat exchanger 39c, and the downstream temperature sensor 11 b3 is used to detect the temperature of the reforming water having passed through the heat exchanger 39c.

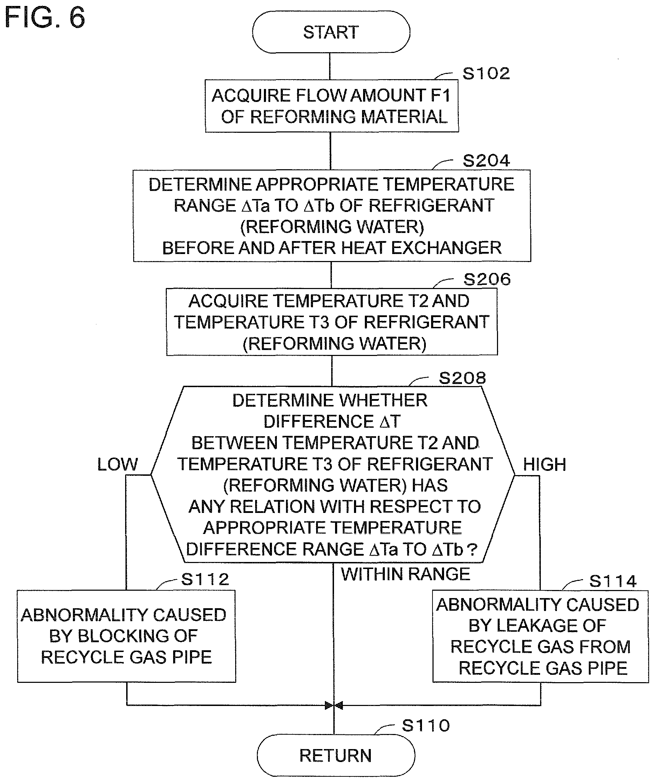

In the second embodiment, as shown in Fig. 6, in step S204, the control device 15 determines the appropriate temperature difference range ΔTa to ΔTb of the temperature difference ΔT of the reforming water before and after the heat exchanger 39c in response to the flow rate F1 of the reforming material acquired in step S102 instead of the above-described process in step S104.

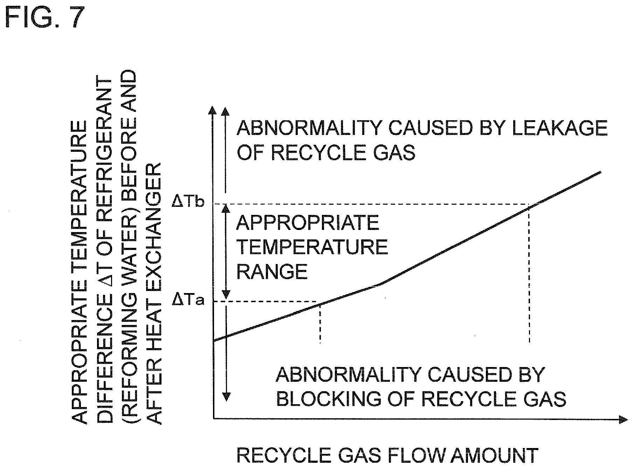

Similarly to the above-described first embodiment, the recycle gas passes through the recycle gas pipe 39 when the reforming material passes through the reforming material supply pipe 11 a. The recycle gas is a part of a gas reformed in a high-temperature state (about 600°C) by the reforming unit 33. For this reason, when the recycle gas pipe 39 is normal, the reforming water exchanges heat with the high-temperature recycle gas when passing through the heat exchanger 39c. As shown in Fig. 7, the temperature difference ΔT of the reforming water before and after the heat exchanger 39c falls within the appropriate temperature difference range ΔTa to ΔTb (ΔTa indicates the lower-limit temperature of the appropriate temperature difference and ΔTb indicates the upper-limit temperature of the appropriate temperature difference).

Further, similarly to the above-described first embodiment, the flow rate of the recycle gas has a correlation with the flow rate F1 of the reforming material. That is, the flow rate of the recycle gas passing through the recycle gas pipe 39 decreases when the flow rate F1 of the reforming material increases. For this reason, the appropriate temperature difference range ΔTa to ΔTb of the temperature difference ΔT of the reforming water before and after the heat exchanger 39c shown in Fig. 7 changes in accordance with the flow rate F1 of the reforming material.

In step S206, the control device 15 acquires the detection temperature T2 and the detection temperature T3 of the reforming water before and after the heat exchanger 39c detected by the temperature sensors 11b2 and 11b3 instead of the above-described process in step S106. In step S208, the control device 15 determines whether the difference ΔT between the detection temperature T2 and the detection temperature T3 of the reforming water before and after the heat exchanger 39c acquired in step S206 falls within the appropriate temperature difference range ΔTa to ΔTb determined in step S204, is lower than the appropriate temperature difference range ΔTa to ΔTb, or is higher than the appropriate temperature difference range ΔTa to ΔTb instead of the above-described process in step S108. Moreover, the process in step S208 indicates a process of detecting a state where the recycle gas normally passes through the recycle gas pipe 39 based on the difference ΔT between the detection temperature T2 and the detection temperature T3 of the reforming water before and after the heat exchanger 39c.

When the recycle gas pipe 39 is normal, the recycle gas passes through the recycle gas pipe 39 in response to the flow rate F1 of the reforming material, the difference ΔT between the detection temperature T2 and the detection temperature T3 of the reforming water before and after the heat exchanger 39c falls within the appropriate temperature difference range ΔTa to ΔTb. In this case, the control device 15 determines that the difference falls within the range in step S208 and moves the program to step S110 so as to end the routine.

Meanwhile, when abnormality occurs in which the passage hole of the orifice 39b of the recycle gas pipe 39 is blocked, the recycle gas does not pass through the recycle gas pipe 39. When the recycle gas pipe 39 is blocked, the difference ΔT between the detection temperature T2 and the detection temperature T3 of the reforming water before and after the heat exchanger 39c becomes lower than the appropriate temperature difference range ΔTa to ΔTb. In this case, the control device 15 determines that the difference is lower than the range ΔTa to ΔTb in step S208 and moves the program to step S112.

Further, when abnormality occurs in which the recycle gas leaks from the recycle gas pipe 39, a large amount of the recycle gas passes through the recycle gas pipe 39 compared to the case where any abnormality does not occur. When a large amount of the recycle gas passes through the recycle gas pipe 39, the difference ΔT between the detection temperature T2 and the detection temperature T3 of the reforming water before and after the heat exchanger 39c becomes higher than the appropriate temperature difference range ΔTa to ΔTb. In this case, the control device 15 determines that the difference is higher than the range ΔTa to ΔTb in step S208 and moves the program to step S114.

In the fuel cell system of the second embodiment, the recycle gas pipe 39 is provided with the heat exchanger 39c which exchanges heat with the recycle gas through the refrigerant, and the temperature of the recycle gas is indirectly detected by the detection of the temperature of the refrigerant of the heat exchanger 39c. In the second embodiment, the reforming water supplied to the reforming unit 33 is used as the refrigerant exchanging heat with the recycle gas. As described above, the heat exchanger 39c accommodates a part of the water supply pipe 11 b which supplies the reforming water to the reforming unit 33, the fuel cell system and includes the temperature sensors 11b2 and 11b3 which detect the upstream temperature and the downstream temperature of the heat exchanger 39c in the water supply pipe 11 b. The control device 15 includes the detection portion (step S208) which detects a state where the recycle gas normally passes through the recycle gas pipe 39 based on the difference ΔT between the detection temperature T2 and the detection temperature T3 of the temperature sensors 11b2 and 11b3.

The control device 15 may detect the abnormality of the recycle gas pipe 39 by determining whether the recycle gas normally passes through the recycle gas pipe 39 based on the determination result of the detection portion. Further, since the reforming water supplied to the reforming unit 33 is used as the refrigerant of the heat exchanger 39c, it is possible to recover the heat of the recycle gas by the reforming water and hence to improve the thermal efficiency and the power generation efficiency of the fuel cell system. Moreover, in the second embodiment, the temperature of the reforming water (the refrigerant) is detected by the temperature sensors 11b2 and 11b3 (step S206), and the normal passage state of the recycle gas is detected based on the difference ΔT between the detection temperature T2 and the detection temperature T3 of the temperature sensors 11b2 and 11b3 (step S208). However, the invention is not limited thereto. For example, the flow rate of the recycle gas passing through the recycle gas pipe 39 may be calculated based on the difference ΔT between the detection temperature T2 and the detection temperature T3 of the reforming water (the refrigerant) detected in step S206, and the control device may determine whether the calculated flow rate of the recycle gas is the normal flow rate.

### (First Modified Example of Second Embodiment)

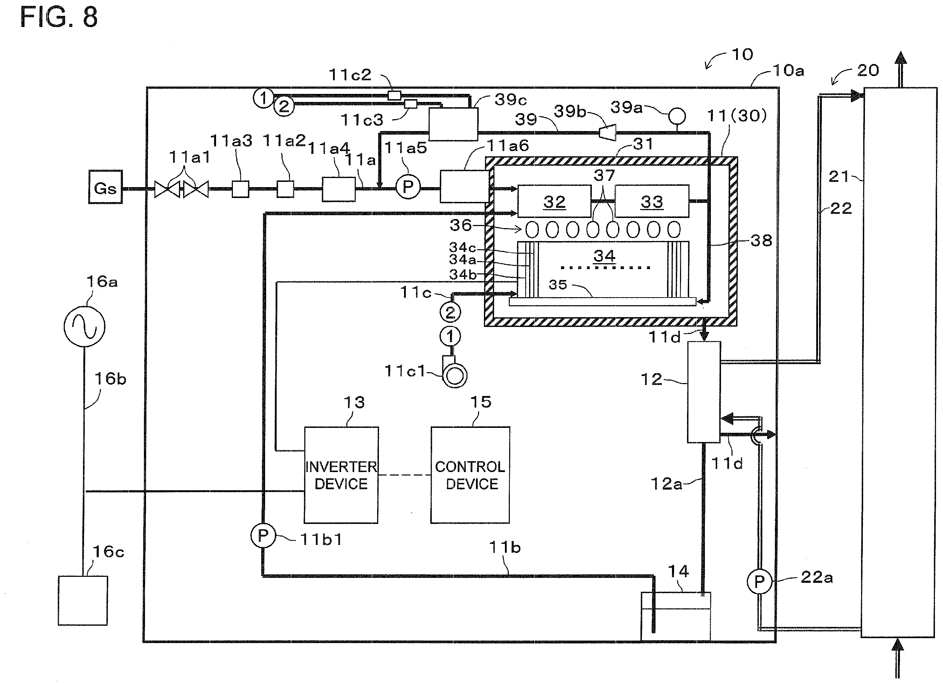

In the second embodiment, the recycle gas pipe 39 is provided with the heat exchanger 39c which exchanges heat with the recycle gas by the refrigerant. In the second embodiment, the reforming water supplied to the reforming unit 33 is used as the refrigerant of the heat exchanger 39c. However, in a first modified example of the second embodiment shown in Fig. 8, cathode air supplied to the fuel cell 34 is used as the refrigerant. That is, the heat exchanger 39c accommodates a part of the cathode air supply pipe 11c which supplies cathode air, and the cathode air supply pipe 11c is provided with temperature sensors 11c2 and 11c3 which are provided at the upstream side and the downstream side of the heat exchanger 39c.

In the first modified example, the control device 15 includes the detection portion (step S208) which detects a state where the recycle gas normally passes through the recycle gas pipe 39 based on the difference ΔT between the detection temperature T2 and the detection temperature T3 of the temperature sensors 11c2 and 11c3 similarly to the above-described second embodiment. Thus, the abnormality of the recycle gas pipe 39 may be detected by determining whether the recycle gas normally passes through the recycle gas pipe 39 by the use of the detection portion. Further, since the cathode air supplied to the fuel cell 34 is used as the refrigerant of the heat exchanger 39c, it is possible to recover the heat of the recycle gas by the cathode air and hence to improve the thermal efficiency and the power generation efficiency of the fuel cell system.

### (Second Modified Example of Second Embodiment)

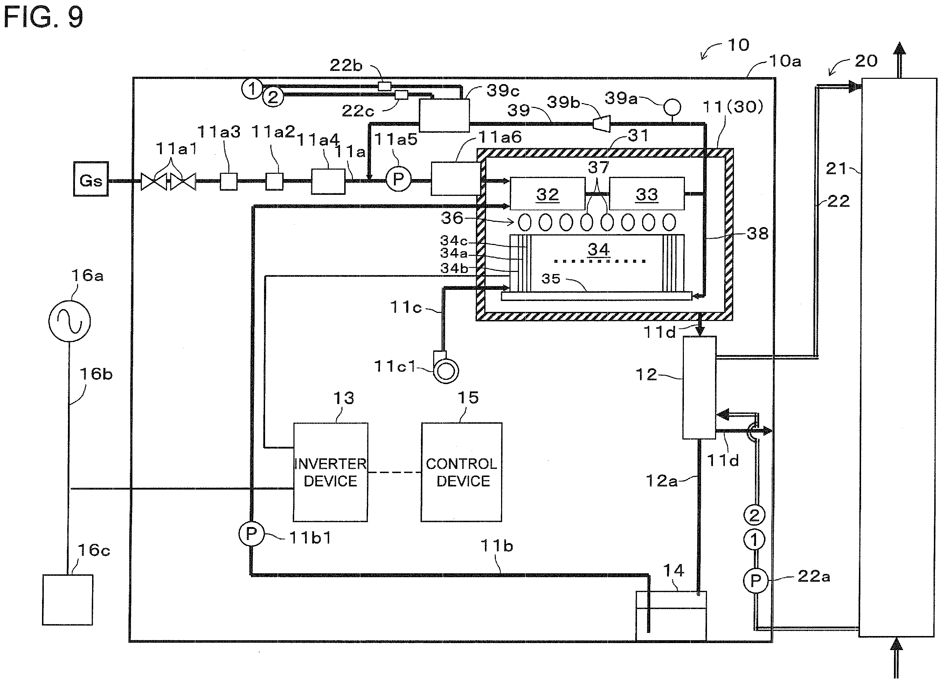

Further, in a second modified example of the second embodiment, as shown in Fig. 9, exhaust heat recovery water for recovering the exhaust heat of the fuel cell 34 is used as the refrigerant of the heat exchanger 39c. That is, the heat exchanger 39c accommodates a part of the hot storage water circulation line 22 and the hot storage water circulation line 22 is provided with temperature sensors 22b and 22c which are provided at the upstream side and the downstream side of the heat exchanger 39c.

In the second modified example, the control device 15 includes the detection portion (step S208) which detects a state where the recycle gas normally passes through the recycle gas pipe 39 based on the difference ΔT between the detection temperature T2 and the detection temperature T3 of the temperature sensors 22b and 22c similarly to the above-described second embodiment. The control device may detect the abnormality of the recycle gas pipe 39 by determining whether the recycle gas normally passes through the recycle gas pipe 39 by the use of the detection portion. Further, since the exhaust heat recovery water for recovering the exhaust heat of the fuel cell 34 is used as the refrigerant of the heat exchanger 39c, it is possible to recover the heat of the recycle gas by the exhaust heat recovery water and hence to improve the thermal efficiency and the power generation efficiency of the fuel cell system.

### (Third Modified Example of Second Embodiment)

Further, in a third modified example (not shown) of the second embodiment, air of the housing 10a accommodating at least the fuel cell 34 is used as the refrigerant of the heat exchanger 39c. That is, the heat exchanger 39c is disposed at a position where the convection of air occurs due to a fan (not shown) provided in the housing 10a, and a temperature sensor (not shown) is provided at each of the upstream side and the downstream side of the convection air of the heat exchanger 39c inside the housing 10a.

In the third modified example, the control device 15 includes the detection portion (step S208) which detects a state where the recycle gas normally passes through the recycle gas pipe 39 based on the difference ΔT between the detection temperature T2 and the detection temperature T3 of the temperature sensor similarly to the above-described second embodiment. The control device may detect the abnormality of the recycle gas pipe 39 by determining whether the recycle gas normally passes through the recycle gas pipe 39 by the use of the detection portion. Further, since the air of the housing 10a is used as the refrigerant, there is no need to provide separate pipes for supplying refrigerant in the heat exchanger 39c similarly to the above-described second embodiment and the modified examples thereof. Thus, an increase in cost hardly occurs. Moreover, the modified examples of the second embodiment use different kinds of refrigerant of the heat exchanger 39c, and have the same configuration and effect as the second embodiment.

The fuel cell 34 of the fuel cell system of the above-described embodiment is the solid oxide fuel cell (SOFC), but the invention is not limited thereto. For example, a polymer fuel cell (PEFC) may be also employed as the fuel cell.

In the fuel cell system of the above-described embodiment, the pressure adjustment device 11 a4 is provided in the reforming material supply pipe 11 a as the recycle fuel supply device used to circulate the reformed gas(the recycle fuel) in the recycle gas pipe 39, but the invention is not limited thereto. For example, a pump which pressure-feeds the recycle gas to the recycle gas pipe 39 may be provided as the recycle fuel supply device used to circulate the reformed gas (the recycle fuel) in the recycle gas pipe 39.

### [Description of Reference Numerals and Signs]

11: housing, 11 a: reforming material supply pipe, 11 a4: pressure adjustment device (recycle fuel supply device), 11a6: desulfurizer, 11b2, 11 b3: temperature sensor, 15: control device (detection portion), 33: reforming unit, 34: fuel cell, 38: reformed gas supply pipe (fuel supply pipe), 39: recycle gas pipe (recycle fuel pipe), 39a: temperature sensor, 39c: heat exchanger
To reliably detect the abnormality of a recycle fuel pipe that returns a part of fuel reformed by a reforming unit to a desulfurizer and suppress the degradation of the reforming unit and the failure of a fuel cell due to a sulfur component. Provided is a fuel cell system in which a recycle gas pipe 39 is provided with a temperature sensor 39a which directly detects the temperature of a recycle gas and a control device 15 detects the passage and/or the flow rate of the recycle gas passing through the recycle gas pipe 39 based on the temperature of the recycle gas detected by the temperature sensor 39a (a detection portion: step S108).

## Claims

1. A fuel cell system comprising:
a fuel cell (34) which generates power by a fuel and an oxidant gas;
a reforming unit (33) which generates the fuel from a reforming material and a reforming water and supplies the fuel to the fuel cell;
a desulfurizer (11a6) which removes a sulfur component contained in the reforming material and supplies the reforming material to the reforming unit;
a recycle fuel pipe (39) which connects a fuel supply pipe (38) supplying the fuel from the reforming unit to the fuel cell to a reforming material supply pipe (11a) supplying the reforming material to the desulfurizer and returns a part of the fuel as a recycle fuel to the desulfurizer;
a recycle fuel supply device (11a4) which circulates the recycle fuel in the recycle fuel pipe;
the fuel cell system being **characterized by**:
a heat exchanger (39c) provided in the recycle fuel pipe, the heat exchanger exchanging heat with the recycle fuel by a refrigerant to recover heat;
a temperature sensor (11b3) which detects a temperature of the refrigerant or the heat exchanger, thereby to indirectly detect a temperature of the recycle fuel; and
a detection portion (15) which detects the passage and/or the flow rate of the recycle fuel passing through the recycle fuel pipe based on the temperature of the recycle fuel detected by the temperature sensor (11b3).

2. The fuel cell system according to claim 1,
wherein the reforming water supplied to the reforming unit is used as the refrigerant.

3. The fuel cell system according to claim 1,
wherein a cathode air supplied to the fuel cell is used as the refrigerant.

4. The fuel cell system according to claim 1,
wherein an exhaust heat recovery water recovering the exhaust heat of the fuel cell is used as the refrigerant.

5. The fuel cell system according to claim 1,
wherein an air inside a housing (11) accommodating at least the fuel cell is used as the refrigerant.

6. The fuel cell system according to any one of claims 1 to 5, further comprising:
a control device which determines that the recycle fuel pipe is normal when a temperature difference of the refrigerant before and after the heat exchanger falls within an appropriate temperature range and determines that the recycle fuel pipe is not normal when the temperature difference is lower or higher than the appropriate temperature range during a warming operation or a power generation operation.

## Patentansprüche

1. Brennstoffzellensystem, das Folgendes aufweist:
eine Brennstoffzelle (34), die Leistung durch einen Kraftstoff und ein Oxidationsmittelgas erzeugt;
eine Reformationseinheit (33), die den Kraftstoff aus einem Reformationsmaterial und einem Reformationswasser erzeugt und den Brennstoff zu der Brennstoffzelle zuführt;
eine Entschwefelungseinrichtung (11a6), die eine Schwefelkomponente entfernt, die in dem Reformationsmaterial enthalten ist, und das Reformationsmaterial zu der Reformationseinheit zuführt;
eine Wiederverwertungskraftstoffleitung (39), die eine Kraftstoffzuführleitung (38), die den Kraftstoff von der Reformationseinheit zu der Brennstoffzelle zuführt, mit einer Reformationsmaterialzuführleitung (11a) verbindet, die das Informationsmaterial zu der Entschwefelungseinrichtung zuführt, und die einen Teil des Kraftstoffs als einen Wiederverwertungskraftstoff zu der Entschwefelungseinrichtung zurückführt;
eine Wiederverwertungskraftstoffzuführvorrichtung (11a4), die den Wiederverwertungskraftstoff in der Wiederverwertungskraftstoffleitung zirkuliert;
wobei das Brennstoffzellensystem **gekennzeichnet ist durch**:
einen Wärmetauscher (39c), der in der Wiederverwertungskraftstoffleitung vorgesehen ist, wobei der Wärmetauscher Wärme mit dem Wiederverwertungskraftstoff **durch** ein Kühlmittel austauscht, um Wärme wieder zu erlangen;
einen Temperatursensor (11b3), der eine Temperatur des Kühlmittels oder des Wärmetauschers erfasst, um dadurch indirekt eine Temperatur des Wiederverwertungskraftstoffs zu erfassen; und
einen Erfassungsabschnitt (15), der den Durchgang und/oder die Strömungsrate des Wiederverwertungskraftstoffs, der **durch** die Wiederverwertungskraftstoffleitung hindurchführt, basierend auf der Temperatur des Wiederverwertungskraftstoffs erfasst, die **durch** den Temperatursensor (11b3) erfasst ist.

2. Brennstoffzellensystem nach Anspruch 1,
wobei das Reformationswasser, das zu der Reformationseinheit zugeführt wird, als das Kühlmittel verwendet wird.

3. Brennstoffzellensystem nach Anspruch 1,
wobei eine Kathodenluft, die zu der Brennstoffzelle zugeführt wird, als das Kühlmittel verwendet wird.

4. Brennstoffzellensystem nach Anspruch 1,
wobei ein Abgaswärmerückgewinnungswasser, das die Abgaswärme der Brennstoffzelle zurückgewinnt, als das Kühlmittel verwendet wird.

5. Brennstoffzellensystem nach Anspruch 1,
wobei eine Luft innerhalb eines Gehäuses (11), das zumindest die Brennstoffzelle beherbergt, als das Kühlmittel verwendet wird.

6. Brennstoffzellensystem nach einem der Ansprüche 1 bis 5, ferner mit:
einer Steuervorrichtung, die bestimmt, dass die Wiederverwertungskraftstoffleitung normal ist, wenn eine Temperaturdifferenz des Kühlmittels vor und nach dem Wärmetauscher in einen geeigneten Temperaturbereich fällt, und bestimmt, dass die Wiederverwertungskraftstoffleitung nicht normal ist, wenn die Temperaturdifferenz während eines Aufwärmbetriebs oder eines Leistungserzeugungsbetriebs geringer oder höher als der geeignete Temperaturbereich ist.

## Revendications

1. Système de pile à combustible comprenant :
une pile à combustible (34) qui génère de l'électricité par le biais d'un combustible et d'un gaz oxydant ;
une unité de reformage (33) qui génère le combustible à partir d'un matériau de reformage et d'une eau de reformage et fournit le combustible à la pile à combustible ;
un désulfurisateur (11a6) qui élimine le composant à base de soufre contenu dans le matériau de reformage et fournit le matériau de reformage à l'unité de reformage ;
une conduite de combustible recyclé (39) qui relie une conduite d'alimentation de combustible (38) alimentant le combustible depuis l'unité de reformage vers la pile à combustible vers une conduite d'alimentation de matériau de reformage (11a) fournissant le matériau de reformage au désulfurisateur et renvoyant une partie du combustible sous forme de combustible recyclé vers le désulfurisateur ;
un dispositif d'alimentation de combustible recyclé (11a4) qui fait circuler le combustible recyclé dans la conduite de combustible recyclé ;
le système de pile à combustible étant **caractérisé par** :
un échangeur thermique (39c) prévu dans la conduite de combustible recyclé, l'échangeur thermique échangeant de la chaleur avec le combustible recyclé par le biais d'un réfrigérant pour récupérer la chaleur ;
un capteur de température (11b3) qui détecte une température du réfrigérant ou de l'échangeur thermique, détectant ainsi indirectement une température du combustible recyclé ; et
une partie de détection (15) qui détecte le passage et/ou le débit du combustible recyclé qui passe à travers la conduite de combustible recyclé en fonction de la température du combustible recyclé détectée par le capteur de température (11b3).

2. Système de pile à combustible selon la revendication 1,
dans lequel l'eau de reformage fournie à l'unité de reformage est utilisée en tant que réfrigérant.

3. Système de pile à combustible selon la revendication 1,
dans lequel l'air de la cathode fournie à la pile à combustible est utilisé en tant que réfrigérant.

4. Système de pile à combustible selon la revendication 1,
dans lequel l'eau de récupération de rejet thermique récupérant le rejet thermique de la pile à combustible est utilisée en tant que réfrigérant.

5. Système de pile à combustible selon la revendication 1,
dans lequel l'air à l'intérieur d'un boitier (11) logeant au moins la pile à combustible est utilisé en tant que réfrigérant.

6. Système de pile à combustible selon l'une quelconque des revendications 1 à 5, comprenant en outre :
un dispositif de commande qui détermine que la conduite de combustible recyclé est normale lorsqu'une différence de température du réfrigérant avant et après l'échangeur thermique est comprise dans une plage de température appropriée et détermine que la conduite de combustible recyclé n'est pas normale lorsque la différence de température est inférieure ou supérieure à la plage de température appropriée pendant une opération de chauffage ou une opération de production d'électricité.
